# EUROPEAN PATENT APPLICATION

(11) **EP 2 602 706 A2**
(43) Date of publication of application: **12.06.2013**
(21) Application number: 13158128.2
(22) Date of filing: 12.07.2011
(51) Int. Cl.: G06F 3/0488

(54) **User interactions**

(30) Priority: 12.07.2010 GB 201011687
(62) Divisional of application: 11733903.6
(71) Applicant: Faster Imaging AS, 0277 Oslo (NO)
(72) Inventor: Havnør, Martin, 0277 Oslo (NO)
(74) Representative: Samuels, Adrian James

(57) **Abstract**

A user interface system for controlling an electronic device (2) having a touch-screen (4) is disclosed. The system is configured to detect and identify a static touch on the touch-screen (4) at a fixed contact point; in response to detecting the static touch, to display a graphical object (10a) containing or surrounding the contact point; and to change a visual attribute of the displayed graphical object (10a) progressively over time while the static touch continues.

## Description

This invention relates to methods and apparatus for detecting user input to an electronic device, and to methods and apparatus for controlling a map device.

It is known for electronic devices, such as personal organisers and mobile telephones, to have touch-sensitive display screens. The screens have associated hardware and software for enabling detection of contact by a user at one or more points on the display screen. Traditionally, contact by a stylus or finger is resolved to a single coordinate. This may be used to move a cursor or to select an icon. More recent devices provide multi-touch input, in which contact by two or more styluses or fingers simultaneously can be resolved to a plurality of coordinate points.

Known touch-based interface systems, whether single touch or multi-touch, only support a fairly limited set of interaction operations. Examples of input actions include: a momentary touch to select a graphical user interface (GUI) object; touching and sliding a finger across a display screen to move a cursor or other display object; and a finger-and-thumb pinching movement to zoom out of an image.

A limited set of interaction types means that, in order for a user to give more complicated commands, it is typically necessary to perform a sequence of actions, such as touching a menu icon to invoke an on-screen menu, touching arrow buttons to scroll through the menu, and then touching an entry in the menu in order to perform the desired operation. Reliance on menus is undesirable, since they are relatively slow to operate and can be unintuitive to use, requiring the user to know or discover what options are available via a given menu.

Known devices have particular shortcomings when seeking to receive a command from a user to change the value of a parameter affecting displayed content, such as an image, beyond simply moving or scrolling it left-to-right or up-and-down, or using pinching to zoom in or out. It might, for example, be desirable to adjust the angle of inclination in a perspective view, or to adjust the contrast or brightness of the image.

To receive quantitative input to commands beyond a basic left-right and up-down control of a cursor and left-right and up-down scrolling of an image (such as a map or spreadsheet), it is typically necessary to perform several actions, such as selecting an icon in order to invoke an input object such as a slider (e.g. a volume control) and then touching the slider and moving it in an appropriate direction to set the parameter. Alternatively, a number of sliders may be permanently displayed on the screen, but this wastes screen space and is unattractive.

The present invention seeks to address such shortcomings. From a first aspect, the invention provides a user interface system for controlling an electronic device having a touch-screen, the system being configured:
- to detect and identify sliding contact by a user at a contact point on the touch-screen, wherein the sliding comprises the contact point being moved in a first direction, and to scroll displayed content substantially in the first direction; and
- to detect and identify simultaneous sliding contact by the user at two contact points on the touch-screen, wherein the sliding comprises the contact points being moved substantially parallel to a common axis, and to cause a non-scrolling change in the displayed content in response to said detection of simultaneous sliding.

The invention extends to a method of controlling an electronic device having a touch-screen, comprising:
- detecting and identifying sliding contact by a user at a contact point on the touch-screen, wherein the sliding comprises the contact point being moved in a first direction, and scrolling displayed content substantially in the first direction; and
- detecting and identifying simultaneous sliding contact by the user at two contact points on the touch-screen, wherein the sliding comprises the contact points being moved substantially parallel to a common axis, and causing a non-scrolling change in the displayed content in response to said detection of simultaneous sliding.

The invention further extends to computer software, and a carrier or signal bearing the same, which, when executed on an electronic device having a touch-screen, causes the device:
- to detect and identify sliding contact by a user at a contact point on the touch-screen, wherein the sliding comprises the contact point being moved in a first direction, and to scroll displayed content substantially in the first direction; and
- to detect and identify simultaneous sliding contact by the user at two contact points on the touch-screen, wherein the sliding comprises the contact points being moved substantially parallel to a common axis, and to effect a non-scrolling change in the displayed content in response to said detection of simultaneous sliding.

Thus it will be seen by those skilled in the art that, in accordance with the invention, a user can conveniently use a two-fingered input to control the display of content on a touchscreen using a single input gesture, while still being able to scroll displayed content with a single-fingered input.

In some embodiments, the displayed content comprises a projection, e.g. of a three-dimensional image and the non-scrolling change comprises altering the viewpoint for the projection. The non-scrolling change may be to change the angle of inclination of an inclined perspective projection or to move the viewpoint. In preferred embodiments, the displayed content comprises geographical information, such as a map, satellite photograph, aerial photograph, or some combination of these. In other embodiments, the displayed content may be a technical drawing such as an architectural plan or a mechanical design. In still further embodiments, the displayed content may be a movie, a photograph, or may be generated by a gaming application, etc.

The electronic device may be any suitable device, such as a desktop or laptop computer, a personal digital assistance (PDA), a mobile telephone, a domestic appliance, a camcorder, a camera, etc.

The non-scrolling change may take any suitable form. It may, for example, be a change in a user-interface element such as a slider. Preferably, however, it changes displayed content such as a map or a photograph. In one set of embodiments, the device is a digital camera and the change controls the white balance or degree of zoom of the image displayed in a viewfinder or integrated LCD panel. The change may also affect a non-display function of the device, such as physically moving a zoom lens, or setting the white balance for a stored image.

Motion in one direction along the common axis may increase the degree of the change, while motion in the opposite direction may decrease the degree of the change. For example, movement "up" the screen may increase the zenith angle in an inclined perspective projection, while movement "down" the screen may decrease it.

The non-scrolling change may be open-ended, or may have one or two end points (i.e. maximum or minimum values). It may be controlled by a single-valued variable parameter. The parameter may be able to take any number of discrete values, e.g. more than two, ten or a hundred, or may be effectively continuously variable.

Preferably the displayed content has a top and bottom and the common axis runs from top to bottom; i.e. directly towards the user, or "vertically", when the device is held in a normal operating position. If the content is in portrait format, the common axis is preferably parallel or substantially parallel to the major axis of the display screen; if is in landscape format, then it is parallel or substantially parallel to the minor axis of the display screen. However, in other arrangements, the common axis may be at right angles to the major dimension of the display screen, or at any other appropriate angle, such as along a diagonal from a bottom-left corner to a top-right corner, e.g. at around 45 degrees.

In some embodiments, the system is further configured to detect and identify simultaneous sliding contact by the user at two contact points on the touch-screen, wherein the sliding comprises the contact points being moved substantially perpendicular to said common axis, and to cause a further non-scrolling change in the displayed content in response to said detection of perpendicular simultaneous sliding.

This further non-scrolling change may be unrelated to the first non-scrolling change. For example, it might be to change the contrast or brightness of a displayed image, while the first change might be to alter the angle of tilt in a projection.

Further motions may be identified at or substantially at other predetermined angles to the common axis. For example, two-fingered diagonal slides may perform further non-scrolling functions.

Preferably the system is configured to identify the sliding contact only if the two contact points satisfy a mutual proximity criterion. For example, the two contact points (which may each correspond to a region of contact or pressure) may have to be within a predetermined distance of each other for some or all of the motion. This distance may be fixed for the electronic device, or for a particular application running on the device, or it may be varied according to context or user preference.

Motion may be identified as substantially parallel to or at a particular angle or axis if it satisfies a predetermined directional criterion. It may, for example, have to be within a few degrees of the intended angle; say, within a maximum of 15, 10 or 2 degrees.

In some embodiments, a motion is identified as being in a particular direction after a predetermined time or distance has elapsed within which a directional criterion is satisfied, and thereafter no directional criterion or a more relaxed directional criterion is applied, e.g. until the contact at one or both contact points ends. During this second phase, the degree of the non-scrolling change may correspond to the component of motion in the particular direction, with any perpendicular component being ignored. In this way, so long as an input gesture is initially performed sufficiently accurately to allow the device to detect and identify it, the user can subsequently continue the input with less need for precision.

This is also considered to be novel and inventive in its own right and thus when viewed from another aspect the invention provides an electronic device comprising a touch-screen for receiving inputs thereto said device being configured to identify a touch gesture comprising a first phase in which a moving touch is identified as being in a particular direction by applying a directional criterion; and a second phase in which no directional criterion or a more relaxed directional criterion is applied, wherein said first phase lasts for a predetermined time, or distance, of touch.

The invention extends to a method of controlling an electronic device having a touch-screen for receiving inputs thereto, comprising identifying a touch comprising a first phase in which a moving touch is identified as being in a particular direction by applying a directional criterion; and a second phase in which no directional criterion or a more relaxed directional criterion is applied, wherein said first phase lasts for a predetermined time, or distance, of touch.

The invention also extends to computer software, and a carrier bearing the same, which, when executed on an electronic device having a touch-screen for receiving inputs thereto, causes the device to identify a touch gesture comprising a first phase in which a moving touch is identified as being in a particular direction by applying a directional criterion; and a second phase in which no directional criterion or a more relaxed directional criterion is applied, wherein said first phase lasts for a predetermined time, or distance, of touch.

In a set of preferred embodiments of any aspect of the invention, the device is arranged to detect and identify a touch on the touch-screen at a fixed contact point, satisfying a predetermined minimum duration; and cause a change in the display in response to said detection so as to display information relating to the contact point. The contact point may be a precise point, such as a single pixel, or may be a region, such as a cluster of pixels, such as 10 or 100 pixels, e.g. in a circle or square. The touch can be considered to be static because it includes contact at a fixed contact point. A degree of varying contact may also be taking place, e.g. due to unsteadiness in the user's hand which might result in the contact patch changing shape between the user's fingertip and the display screen.

Such an interaction may be useful with a range of applications, such as editing or viewing technical drawings, 3D models or interactive movies. However it is particularly beneficial when the device is used to display a map such that the device determines a geographic location which corresponds to the contact point on the touch-screen and the information displayed relates to the geographic location. This addresses a shortcoming with map applications in that it is awkward for a user to provide basic geographic coordinate information as part of an input command to the map application. A user would typically need briefly to touch a coordinate position on the screen in order to supply a geographic coordinate input; however, this single action cannot then provide any additional command information, so the coordinate can only be used for a predetermined purpose. This purpose must either be a system default, or the user must have performed an earlier step to select a function to receive the coordinate information, thereby requiring a relatively lengthy input sequence.

This idea is novel and inventive in its own right and thus when viewed from a further aspect, the invention provides a user interface system for controlling an electronic device having a touch-screen, the system being configured to:
- display a representation of geographic features on the touch-screen;
- detect and identify a static touch satisfying a predetermined minimum duration on the touch-screen at a fixed contact point;
- determine a geographic location corresponding to the contact point on the touch-screen; and
- cause a change in the display in response to said detection so as to display information relating to the geographic location.

The invention extends to a method of controlling an electronic device having a touch-screen, comprising:
- displaying a representation of geographic features on the touch-screen;
- detecting and identifying a static touch satisfying a predetermined minimum duration on the touch-screen at a fixed contact point;
- determining a geographic location corresponding to the contact point on the touch-screen; and
- causing a change in the display in response to said detection so as to display information relating to the geographic location.

The invention also extends to computer software, and a carrier bearing the same, which, when executed on an electronic device having a touch-screen, causes the device to:
- display a representation of geographic features on the touch-screen;
- detect and identify a static touch satisfying a predetermined minimum duration on the touch-screen at a fixed contact point;
- determine a geographic location corresponding to the contact point on the touch-screen; and
- cause a change in the display in response to said detection so as to display information relating to the geographic location.

In this way it is possible to distinguish between a short touch, as is known for use in calling up a menu, etc. without any geographic connection, and a long touch that can be used to display information relating to a geographic location (e.g. a street address) that corresponds to a position on the display (e.g. a screen pixel that is displaying a road on a map). Therefore a single user action can provide both geographic or coordinate information and be used to indicate a desired function, i.e. the presentation of geographic information.

The representation of geographic features may be in any appropriate format; e.g. it may comprise a photograph (e.g. a satellite, aerial or land-based photograph), a vector map, a bitmap map, or any combination of these, such as a vector map layer overlaid on a composite satellite image.

The information relating to the geographic location is not limited to any particular information or format. It may, in some embodiments, comprise a street address, or latitude and longitude, or information about nearby places of interest. The information may be displayed immediately after the touch ends, or after a delay, possibly in which some further user interaction occurs.

A problem with special input mechanisms, such as this long touch, can be that the user does not know that such an interaction is possible or is supported by the device, and might not take advantage of the mechanism.

Thus, from a further aspect, the invention provides a user interface system for controlling an electronic device having a touch-screen, the system being configured:
- to detect and identify a static touch on the touch-screen at a fixed contact point;
- in response to detecting the static touch, to display a graphical object containing or surrounding the contact point; and
- to change a visual attribute of the displayed graphical object progressively over time while the static touch continues.

The invention extends to a method of controlling an electronic device having a touch-screen, comprising:
- detecting and identifying a static touch on the touch-screen at a fixed contact point;
- in response to detecting the static touch, displaying a graphical object containing or surrounding the contact point; and
- changing a visual attribute of the displayed graphical object progressively over time while the static touch continues.

The invention also extends to computer software, and a carrier bearing the same, which, when executed on an electronic device having a touch-screen, causes the device:
- to detect and identify a static touch on the touch-screen at a fixed contact point;
- in response to detecting the static touch, to display a graphical object containing or surrounding the contact point; and
- to change a visual attribute of the displayed graphical object progressively over time while the static touch continues.

In this way, the user is made aware of the fact that prolonged static contact is being detected and is causing some change of state in the device. For certain attributes, such as size, the change in the attribute cannot change indefinitely, which encourages the user to maintain contact in order to see what happens; i.e. the user is led to anticipate that some further change will occur as a consequence of maintaining the contact for sufficiently long. This feedback therefore encourages exploration and also provides reassurance that the input is being received.

The attribute might, for example, be the object's opacity (e.g. in an alpha compositing environment), colour, brightness, motion (e.g. amount of vibration) or size.

Once a predetermined duration of contact has been reached, preferably the change stops and a function of the device is invoked. Preferably the function is different from that which would have been invoked had only a momentary static contact (i.e. less than the predetermined duration) occurred.

The graphical object may take any form. It may, for example, be a simple geometric shape, such as a circle or disc, or a filled or outline square. In some preferred embodiments, however, it is a menu which grows over time until it reaches a predetermined size. The menu may contain text which is initially too small to read, but which become progressively more legible as it increases in size. The menu is typically not interactive until it reaches full size; i.e. while small it is effectively just an icon or image of the full menu.

The graphical object may change in a number of discrete steps, such as 3, 5 or 10 steps, or it may change substantially smoothly or continuously.

Where the attribute is size, the change may occur in one, two or three real or virtual dimensions. The size along one or more dimensions may increase linearly with time. For example, the object may be a ring whose radius increases linearly with time.

In one set of embodiments of the invention according to any of the preceding aspects, the electronic device is configured to:
- detect and identify an input that comprises a temporary, static contact between a user and the touch-screen at a first contact point, followed, within a predetermined time period after the static contact, by a sliding contact between the user and the touch-screen that traces a moving contact point along a path originating from a second contact point; and
- cause a change in the display on the touch-screen in response to said detection, the change depending on an angle between the moving contact point and an origin.

Indeed when viewed from another aspect, the invention provides an electronic device having a touch-screen, the device being configured to:
- detect and identify an input that comprises a temporary, static contact between a user and the touch-screen at a first contact point, followed, within a predetermined time period after the static contact, by a sliding contact between the user and the touch-screen that traces a moving contact point along a path originating from a second contact point; and
- cause a change in the display on the touch-screen in response to said detection, the change depending on an angle between the moving contact point and an origin.

The invention extends to a method of controlling an electronic device having a touch-screen, comprising:
- detecting and identifying an input that comprises a temporary, static contact between a user and the touch-screen at a first contact point, followed, within a predetermined time period after the static contact, by a sliding contact between the user and the touch-screen that traces a moving contact point along a path originating from a second contact point; and
- changing the display on the touch-screen in response to said detection, the change depending on an angle between the moving contact point and an origin.

The invention also extends to computer software, and a carrier bearing the same, which, when executed on an electronic device having a touch-screen, causes the device to:
- detect and identify an input that comprises a temporary, static contact between a user and the touch-screen at a first contact point, followed, within a predetermined time period after the static contact, by a sliding contact between the user and the touch-screen that traces a moving contact point along a path originating from a second contact point; and
- causing a change in the display on the touch-screen in response to said detection, the change depending on an angle between the moving contact point and an origin.

It is thereby possible in such embodiments for a user to control a display, for example to rotate it, with a single finger, using an input that can be distinguished from other known inputs, such as a single touch and slide movement to scroll or pan displayed content. By determining the angle or bearing of the moving contact point relative to an origin (e.g. the centre of the screen or a corner of the screen), it is possible to provide particularly intuitive control, especially when the change in the display is to rotate a displayed object. This may be particularly useful in a map application, where a user desires to orient the map with the direction he is facing, or in a graphics viewing or editing application such as 3D design software. However there are many other applications, such gaming or controlling sound parameters in a sound playback or recording application, etc. where such interaction may be beneficial.

By contrast, in known touch-screen devices sliding movement by a single finger is typically used to scroll or pan displayed content in the direction of the movement. One approach for rotating displayed content requires the use of two digits. One finger, such as the user's middle finger is touched onto the touch-screen and held static while a second finger, such as the user's index finger of the same hand, is touched to the touch-screen and moved in an arc around the middle finger. Displayed content is rotated about a virtual pivot located under the static finger, by an angle corresponding to an arc traced out by the index finger. Such an input is, however, awkward for a user to perform, and does not permit unlimited rotation, since it is impossible to rotate the index finger arbitrarily far without the user's fingers becoming tangled. It also requires the use of hardware and software that supports multi-touch, which is not always available and can be more expensive than a device that only supports single-touch input.

The predetermined time period may be measured from the initiation or cessation of the static contact, or in any other appropriate way. It may be of any appropriate duration, such as 0.5 or 1 second. If the time period elapses without any sliding contact, the initial input may be disregarded or treated as a different input type, such as a select input used, say, to invoke an on-screen menu or display information related to the geographic location as described previously.

The first and second contact points may have to satisfy a predetermined mutual proximity criterion for the input to be detected and identified, although this isn't essential. For example, they may have to be located within a predetermined maximum distance of each other, e.g. within 5 cm or 1 cm. This can help reduce the likelihood of false input recognition.

This angle-dependent interaction can present a similar challenge to the long touch interaction in that the user may not realise that the interaction is available, or how to use it. Preferably, therefore, a graphical display object is caused to appear when a touch is detected at the second contact point, after the temporary static touch has ended. In this way, the user may realise that a different interaction is possible than for only a single touch, and can be encouraged to try sliding the second contact point.

The object may convey the idea of rotation by being, for example, circular or rotationally symmetric - e.g. it may comprise an element that has four-fold rotation symmetry, such as a cross or representation of a compass. The object preferably remains displayed only for as long as the sliding contact continues.

The object may change in response to the sliding contact. This change may depend on the angle between the moving contact point and the origin. For example, the object may indicate the angle, or amount of rotation, in degrees.

Some embodiments of the invention are particularly well suited to use with a map application, e.g. an application for viewing a street map or satellite images, or an application for pedestrian navigation. This arises because it can be particularly undesirable to clutter a display screen with input controls (such as slider bars, menus and icons) when displaying a complicated map, as it is beneficial to dedicate the greatest possible number of pixels to displaying the map features. Nonetheless, it is also desirable to be able to manipulate the map in a number of different ways. Input types according to aspects of the invention set out above permit such manipulation simply and without needing to waste screen space.

In some embodiments, a two-finger sliding input (e.g. horizontally), as described above, can conveniently allow a user to control the apparent height of features displayed on a map, such as buildings. In this way, a user can conveniently "grow" and "shrink" buildings vertically by using a left-to-right or right-to-left two-fingered sliding input, resulting in a better perception of depth and potentially a more accurate representation of reality. This is especially useful when building height is not known in the map data, as it can nonetheless give the perception of a three-dimensional effect in a perspective view. User control of this effect is advantageous as it allows the user to say reduce the building height when parts of the map of interest are occluded by buildings. This is advantageous over having to choose simply whether to have fixed building heights on or to switch off the 3D effect altogether.

Such control of feature height is not limited to input using a two-fingered slide, and is new and inventive in its own right.

Thus, from a further aspect, the invention provides a map system for controlling an electronic device having a display, the system being configured to:
- display graphical information, the graphical information comprising representations of a class of objects;
- receive a user input;
- determine a numerical value from the user input; and
- change the displayed graphical information so as to represent one or more members of said class of physical objects as having a dimension determined by the numerical value.

The invention extends to a method of controlling an electronic device having a display, comprising:
- displaying graphical information, the graphical information comprising representations of a class of objects;
- receiving a user input;
- determining a numerical value from the user input; and
- changing the displayed graphical information so as to represent one or more members of said class of objects as having a dimension determined by the numerical value.

The invention also extends to computer software, and a carrier bearing the same, which, when executed on an electronic device having a display, causes the device to:
- display graphical information, the graphical information comprising representations of a class of objects;
- receive a user input;
- determine a numerical value from the user input; and
- change the displayed graphical information so as to represent one or more members of said class of objects as having a dimension determined by the numerical value.

In a preferred set of embodiments the graphical information is map information and the objects are physical objects represented in the map information. The representations of a class of physical objects might typically be contained in a polygon layer or sub-layer, such as a "buildings" layer, distinct from other layers such as "roads", "water", "points of interest", etc. The layer may be a polygon layer.

The dimension may be in any direction, but is preferably mutually parallel across all the members of the class that are represented as having that dimension. The dimension is preferably the height of the object but may be a width or an obliquely-angled dimension of the object. References in the following paragraphs to the height of an object should therefore be understood as encompassing any appropriate dimension. Height will typically be represented on the device's display along an axis parallel to the major axis (in portrait mode) or minor axis (in landscape mode) of a rectangular display screen, but this is not essential.

All or some of the members in the class (e.g. all buildings) may be represented as having the same height determined by the numerical value. Alternatively, individual members may be represented with different respective heights. In the latter case, a plurality of user inputs may be received, each corresponding to a respective member of the class. A user may, for example, select a member, e.g. by tapping on a graphical representation of the member on the display screen, and then provide an input to adjust its height.

The user input may comprise any one or more of the input types previously described.

In some embodiments, predetermined height information may be available for some members of the class, for example where building heights have been surveyed in a city centre, in which case the user input may be used to control the height of some or all of the remaining members of the class. If individual members have different assigned heights, the user input may nonetheless control the height of these members by adjusting their represented heights in proportion, e.g. by using the numerical input as a linear scaling factor applied to the assigned heights.

The display may be a two-dimensional display. It may show the map information as flat projection containing height information; e.g. as an inclined perspective projection.

Alternatively, the display may be a three-dimensional or stereoscopic display that does not require special spectacles to be worn, such as an auto-stereoscopic display comprising a diffraction grating, a volumetric display or a holographic display; or it may be a three-dimensional or stereoscopic display arranged to be viewed through coloured or polarising lenses. The display may form part of a television set, a computer, a mobile telephone, etc.

The members may be represented in any appropriate manner. In some embodiments, they are represented as vertically-rising prisms which may be represented as solid, or partially or wholly transparent. They may conveniently be coloured or shaded in the same colour as is used to represent the members of the class when they are represented with zero height.

The numerical value may have a maximum value, or may be able to increase unbounded, or bounded only by a register or memory constraint of the device. If a maximum value is provided, this may be predetermined or may be determined with respect to the content currently displayed on the screen, e.g. so as to prevent any building "growing" beyond the top edge of the display screen.

When a maximum value is provided, the input may advantageously allow the user to set the numerical value at any amount between a minimum (typically zero) and the maximum using a single input gesture. Where a two-fingered sliding input is used, preferably the height is determined linearly with the distance moved by the fingers across the display screen, and preferably the linear scaling factor is such that the full range of height values is scaled to less than 50 percent, or less than 25 percent, of the screen dimension along the direction of the movement. In this way, the input can be started near the centre of the screen and be guaranteed to have space to be completed without reaching the edge of the screen.

Objects other than buildings can be controlled. While it is generally envisaged that object will be grown "upwards", negative height may be allowed, e.g. to represent depth.

Optional and preferred features of any aspect of the invention described herein may, where appropriate, be optional or preferred features of any other aspect.

Certain preferred embodiments of the invention will now be described, by way of example only, with reference to the accompanying drawings, in which:
Figure 1 is a plan view of a portable device according to the invention showing a user performing a two-fingered sliding touch gesture;
Figure 2 is a plan view showing a sideways sliding touch gesture;
Figure 3 is a plan view showing a diagonal sliding touch gesture;
Figure 4 is a plan view showing a touch input;
Figure 5a is a plan view showing a first phase of a visual feedback to the user during the touch input;
Figure 5b is a plan view showing a second phase of the visual feedback;
Figure 6 is a plan view of a portable device according to the invention showing a user performing a single-finger turning input;
Figure 7a is a plan view showing a first phase of a visual feedback to the user during the single-finger turning input;
Finger 7b is a plan view showing a second phase of the visual feedback;
Figure 8a is a screenshot from the portable device showing a perspective map in which buildings have zero height;
Figure 8b is a screenshot in which the buildings have medium height;
Figure 8c is a screenshot in which the buildings have greater height;
Figure 9b is a screenshot from the portable device showing a plan view map in a default orientation;

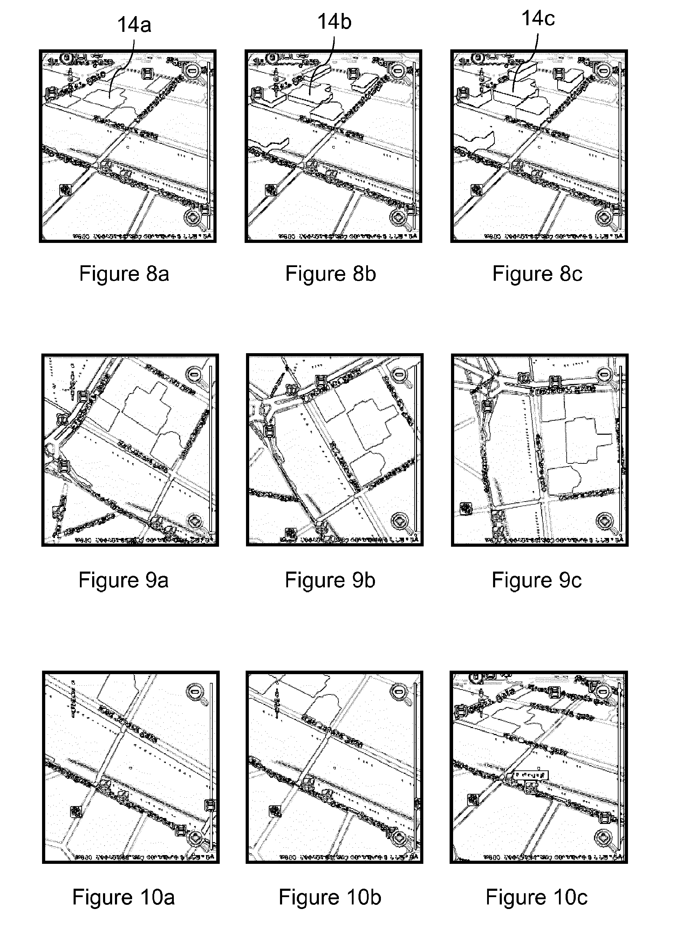

Figure 9b is a screenshot in which the plan view map is rotated clockwise;
Figure 9c is a screenshot in which the plan view map is rotated further clockwise;
Figure 10a is a screenshot from the portable device showing a map with zero inclination;
Figure 10b is a screenshot in which the map is moderately inclined; and
Figure 10c is a screenshot in which the map is inclined further.

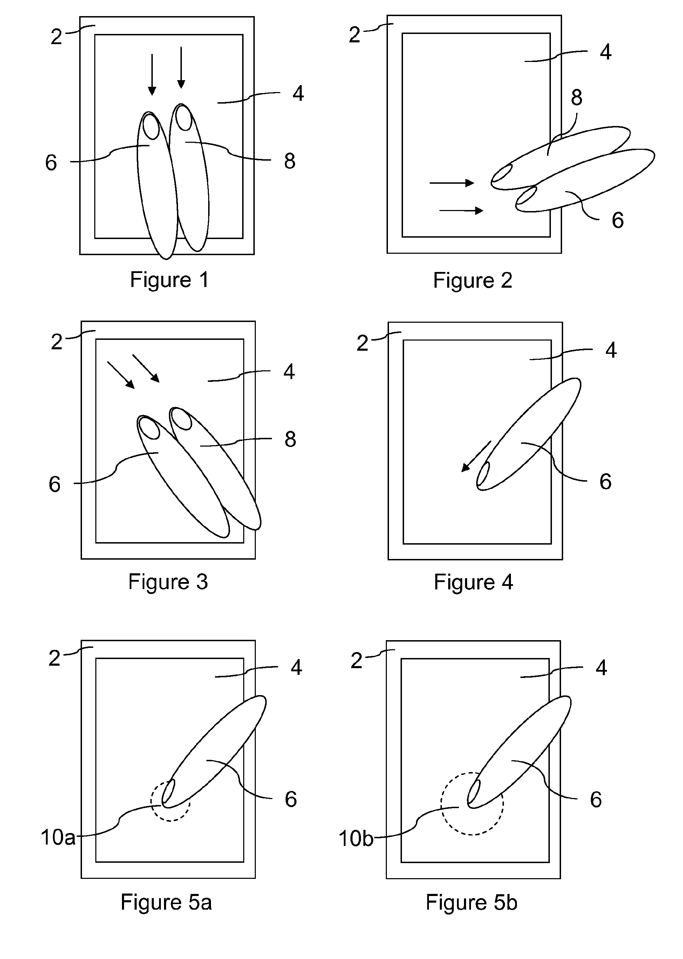

Figure 1 shows a portable device 2, such as a smartphone or PDA. It has a touch-screen display 4. The display may be provided by any suitable technology, such as LCD, OLED or electrophoretic. The touchscreen sensing may be resistive, capacitive, optical, or use surface acoustic waves or strain gauges, or any other suitable technology.

The device 2 need not be portable, but could be a desktop PC, information kiosk, bus shelter, or any other suitable apparatus.

The tips of two of a user's fingers are in contact with the touch-screen 4. These may be the user's index finger 6 and middle finger 8, but other digits or touching implements such as styluses may be permitted.

Signals from the sensing elements of the touch-screen display 4 are processed by drivers to identify and classify contact with the touch-screen. The drivers discriminate between noise or accidental brushes and deliberate touches and movements. The drivers may pass touch information to a higher software layer using an appropriate interface. In some embodiments, the drivers triggers events whenever one or more touches are first detected, as well as when touch points move, and when touches end. A touch can be a region of continual pressure against the display screen 4, which may move. These events typically provide x-y coordinate information indicating a centre of the touch region, and a timestamp. In one non-limiting example the TouchesStart, TouchesMove and TouchesEnd functions available in the Apple (RTM) software developers kit may be employed.

A software library or application, such as a map application, receives the touch events and processes them to distinguish types of input based on timing and location information.

One type of input is shown in Figure 1. A user makes initial contact with the display screen 4 using two fingers 6, 8 at two points simultaneously, or within a short, predetermined time period. He maintains the contact while sliding the two contact points over the screen surface substantially parallel to a long axis of the display screen 4, which is vertical in Figure 1. When moved in one direction, as shown by the arrows, a first input type is detected. When moved in the opposite direction, a second input type, or a negative-valued first input type, or no input, might be detected. If sideways movement is detected beyond a threshold tolerance (which could be specified as a maximum lateral distance from the starting position, or as a maximum angle away from the main axis, or by any other suitable criterion), the motion may be determined to have ended.

The distance moved by the fingers 6, 8 parallel to the long axis can be used to control the value of a variable. This may be implemented so that a real-valued variable increases in value linearly with distance moved from the initial contact points. Movement in the opposite direction may decrease the variable similarly. Other scaling factors might be used, such as exponential control, or control that takes account of the speed of the movement may be applied.

In other embodiments, however, the distance moved by the two fingertips may be disregarded, and a valueless flag may be raised, or a binary value flipped, once the motion has covered a predetermined minimum distance.

The contents of the display screen 4 can provide feedback to the user on the motion. Where the input controls a non-binary variable, the contents of the screen may reflect the value of the variable. A slider might be shown under the fingertips, or an image may move or otherwise alter in response to the input. In one arrangement, such two-fingered vertical movement causes the viewing angle of an inclined perspective projection to change, e.g. when displaying a map. The input might have other effects, such as changing the playback volume of the device 2.

Figure 2 illustrates another input type which is motion of the index finger 6 and middle finger 8 parallel to a minor access of the display screen; horizontally in this instance. Of course, any other two fingers or input objects could be used. The implementation of this gesture detection is similar to that for the vertical motion, but for a perpendicular axis.

The device 2 may be able to be configured for left-handed users, so that motion from left to right, say, has the same effect as motion from right to left would when in a right-handed configuration.

In some arrangements, a two-fingered sideways motion controls the height of buildings displayed on the display screen by a map application (see Figs. 8a to 8c). However, it may be used for other functions, such as moving through tracks on a music player application.

Figure 3 shows the fingers 6, 8 moving along a diagonal axis, at approximately 45 degrees to the long axis. Movements of two fingers along the two different diagonal axes of a rectangular screen may control independent functions.

Figure 4 illustrates a different input type, involving only a single contact point. Rather than a simple touch and release action, which is common to all touch screens, the input here is a long, static press by a finger 6, exceeding a threshold time, which might be 0.5 or 1 or more seconds. The location of the press is used to provide a context-specific response. When the device is running a map application, the position of the long touch on a displayed map is used to cause information about the geographical location corresponding to the touched point on the map to be displayed on the display screen.

Figures 5a and 5b show visual feedback that can be provided to the user while carrying out a long touch shown in Figure 4. On initial contact, a ring 10a is displayed on the screen 4 having a starting diameter of, say, 15 mm. The diameter of this ring 10a grows steadily over time, while the finger 6 remains in contact with a fixed point on the display screen 4. It may grow at, say, 10 mm per second. Figure 5b shows the enlarged ring 10b after a period of time. Once the time threshold is reached, the ring disappears and the geographical location information appears.

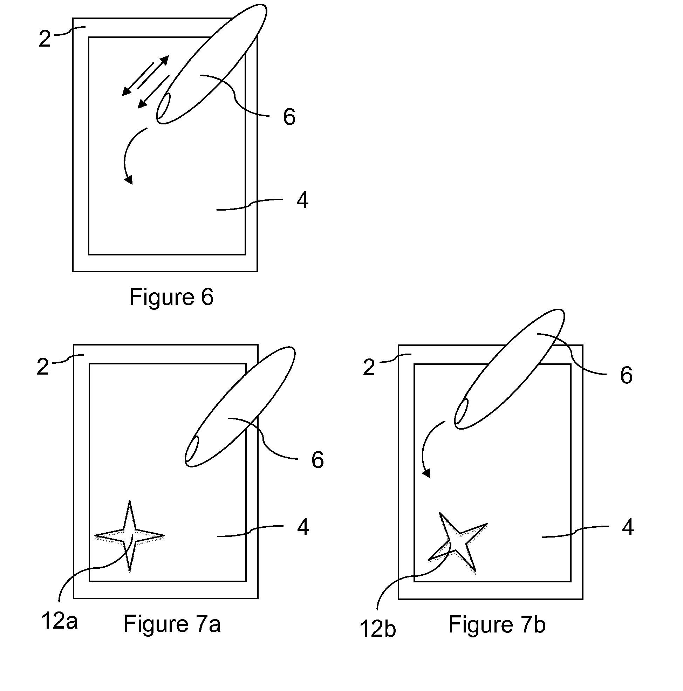

Figure 6 illustrates a further input type embodying an aspect of the invention, in which a finger 6 is briefly touched onto the display screen, lifted, and then reapplied and held against the screen. The finger 6 can then be moved, while remaining in contact with the screen, in order to provide rotational input. An image, such as a map, displayed on the display, is rotated in real-time about the centre point of the display screen, by the same amount as the immediate angular offset of the fingertip compared with its initial contact position, relative to the screen centre. The radial position of the fingertip from the screen centre is ignored. This allows the image to be rotated through an unlimited angle.

Figure 7a shows a graphical indicator 12a that can help the user to understand how to use the input mode described above. The indicator 12a is not shown if the first touch is a single touch used for another operation, such as to open a Point of Interest for a displayed map. However, if the user, during the threshold time, reapplies a touch gesture, the graphical indicator 12a for indication of a rotation mode is displayed. The indication remains active while the user keep his finger 6 touched to the screen, and the indication is removed as soon as the finger 6 is removed from the screen. If the user does not start to move his finger 6 over the screen the graphical indicator 12a will fade out. The user will therefore intuitively understand that a rotation gesture can or should be used.

The indicator 12a may take any form, but in this case is a compass design. An image indicating rotation and the amount of rotation in degrees could be used instead of a geometrical symbol.

Figure 7b shows the finger 6 being moved in a clockwise rotation approximately around a mid-point of the display screen 4. The graphical indicator 12b is rotated from its initial orientation corresponding to the rotation of the image being displayed, and showing the angle of rotation applied in the gesture.

Figures 8a - 8c show the screen content generated by a map application running on the portable device, while a numerical variable controlling building height is adjusted.

All the buildings in a polygon layer are assigned a height value corresponding to the input variable. In Figure 8a, the height is zero and a building 14a in the polygon layer appears flat.

In Figure 8b, the height variable has been increased, and the building 14b, along with all the other buildings in the layer, is rendered with height, e.g. of 5 metres.

In Figure 8c, the height variable has been further increased, and the building 14c, along with all the other buildings in the layer, is rendered with greater height, e.g. of 10 metres.

This building-height adjustment may be controlled by an input as described with reference to Figure 2.

The maps may be created by combining a plurality of polygon layers storing information relating to different features, such as road, rivers and urban areas. The maps may be rendered using calls to an OpenGL (RTM) or OpenVG rendering engine, such as a hardware graphics processor.

Figures 9a - 9c show the screen content generated by the map application as a map in plan view is rotated. In Figure 7a, the map is oriented so that North is aligned with the top of the screen. In Figure 7b, the map is rotated clockwise by 30 degrees. In Figure 7b, the map is rotated clockwise by 60 degrees.

This rotational adjustment may be controlled by an input as described with reference to Figure 6.

Figures 10a - 10c show the screen content generated by the map application as the angle of inclination of a map shown in inclined perspective projection is adjusted. In Figure 10a, the map is in plan view; i.e. with zero inclination. In Figure 10b, the viewpoint is inclined with a zenith angle of 26 degrees. In Figure 10c, the viewpoint is inclined with a zenith angle of 52 degrees.

This inclination angle adjustment may be controlled by an input as described with reference to Figure 1.

The following numbered clauses may also define embodiments of the invention.
1. A user interface system for controlling an electronic device having a touch-screen, the system being configured:
   - to detect and identify sliding contact by a user at a contact point on the touch-screen, wherein the sliding comprises the contact point being moved in a first direction, and to scroll displayed content substantially in the first direction; and
   - to detect and identify simultaneous sliding contact by the user at two contact points on the touch-screen, wherein the sliding comprises the contact points being moved substantially parallel to a common axis, and to cause a non-scrolling change in the displayed content in response to said detection of simultaneous sliding.
2. The user interface system of clause 1 further configured to display an inclined perspective projection and to change the angle of inclination of the projection in response to said detection of simultaneous sliding.
3. The user interface system of clause 1 or 2 wherein the non-scrolling change is controlled by a single-valued variable parameter.
4. The user interface system of any preceding clause, further configured to identify the sliding contact only if the two contact points satisfy a mutual proximity criterion.
5. The user interface system of clause 4 wherein said mutual proximity criterion is that the contact points are within a predetermined distance of each other for some or all of the motion.
6. The user interface system of any preceding clause wherein said displayed content comprises a map.
7. A method of controlling an electronic device having a touch-screen, comprising:
   - detecting and identifying sliding contact by a user at a contact point on the touch-screen, wherein the sliding comprises the contact point being moved in a first direction, and scrolling displayed content substantially in the first direction; and
   - detecting and identifying simultaneous sliding contact by the user at two contact points on the touch-screen, wherein the sliding comprises the contact points being moved substantially parallel to a common axis, and causing a non-scrolling change in the displayed content in response to said detection of simultaneous sliding.
8. An electronic device having a touch-screen, the device being configured to:
   - detect and identify an input that comprises a temporary, static contact between a user and the touch-screen at a first contact point, followed, within a predetermined time period after the static contact, by a sliding contact between the user and the touch-screen that traces a moving contact point along a path originating from a second contact point; and
   - cause a change in the display on the touch-screen in response to said detection, the change depending on an angle between the moving contact point and an origin.
9. The electronic device of clause 8 wherein the change in the display is a rotation of displayed content.
10. The electronic device of clause 8 or 9 wherein the display shows a map.
11. The electronic device of any of clauses 8 to 10 wherein the input is detected and identified only if the first and second contact points satisfy a predetermined mutual proximity criterion.
12. The electronic device of any of clauses 8 to 11 further configured to cause a graphical display object to appear when a touch is detected at the second contact point after the temporary static touch has ended.
13. A method of controlling an electronic device having a touch-screen, comprising:
   - detecting and identifying an input that comprises a temporary, static contact between a user and the touch-screen at a first contact point, followed, within a predetermined time period after the static contact, by a sliding contact between the user and the touch-screen that traces a moving contact point along a path originating from a second contact point; and
   - causing a change in the display on the touch-screen in response to said detection, the change depending on an angle between the moving contact point and an origin.
14. An electronic device having a display, the device being configured to:
   - display graphical information, the graphical information comprising representations of a class of objects;
   - receive a user input;
   - determine a numerical value from the user input; and
   - change the displayed graphical information so as to represent one or more members of said class of objects as having a dimension determined by the numerical value.
15. The device of clause 14 wherein said graphical information is map information and wherein said objects are physical objects represented in the map information.
16. The device of clause 15 wherein the physical objects are buildings.
17. The device of any of clauses 14 to 16 wherein the dimension is the height of the objects.
18. The device of any of clauses 14 to 17 wherein a plurality of the members in the class are represented as having the same dimension determined by the numerical value.
19. The device of any of clauses 14 to 18 further configured to display the map information as flat projection containing height information.
20. The device of any of clauses 14 to 19 wherein the display is a three-dimensional display.
21. The device of any of clauses 14 to 20 further configured to represent the class of physical objects as prisms parallel to the direction of the dimension determined by the numerical value.
22. A method of controlling an electronic device having a display, comprising:
   - displaying graphical information, the graphical information comprising representations of a class of objects;
   - receiving a user input;
   - determining a numerical value from the user input; and
   - changing the displayed graphical information so as to represent one or more members of said class of objects as having a dimension determined by the numerical value.
23. A user interface system for controlling an electronic device having a touch-screen, the system being configured to:
   - display a representation of geographic features on the touch-screen;
   - detect and identify a static touch satisfying a predetermined minimum duration on the touch-screen at a fixed contact point;
   - determine a geographic location corresponding to the contact point on the touch-screen; and
   - cause a change in the display in response to said detection so as to display information relating to the geographic location.
24. A method of controlling an electronic device having a touch-screen, comprising:
   - displaying a representation of geographic features on the touch-screen;
   - detecting and identifying a static touch satisfying a predetermined minimum duration on the touch-screen at a fixed contact point;
   - determining a geographic location corresponding to the contact point on the touch-screen; and
   - causing a change in the display in response to said detection so as to display information relating to the geographic location.
25. A user interface system for controlling an electronic device having a touch-screen, the system being configured:
   - to detect and identify a static touch on the touch-screen at a fixed contact point;
   - in response to detecting the static touch, to display a graphical object containing or surrounding the contact point; and
   - to change a visual attribute of the displayed graphical object progressively over time while the static touch continues.
26. The user interface system of clause 25 wherein the visual attribute is the size of the displayed graphical object.
27. The user interface system of clause 25 or 26 further configured such that, once a predetermined duration of contact has been reached, the change stops and a function of the device is invoked.
28. The user interface system of any of clauses 25 to 27 wherein the graphical object comprises a menu.
29. A method of controlling an electronic device having a touch-screen, comprising:
   - detecting and identifying a static touch on the touch-screen at a fixed contact point;
   - in response to detecting the static touch, displaying a graphical object containing or surrounding the contact point; and
   - changing a visual attribute of the displayed graphical object progressively over time while the static touch continues.
30. An electronic device comprising a touch-screen for receiving inputs thereto said device being configured to identify a touch gesture comprising a first phase in which a moving touch is identified as being in a particular direction by applying a directional criterion; and a second phase in which no directional criterion or a more relaxed directional criterion is applied, wherein said first phase lasts for a predetermined time, or distance, of touch.
31. A method of controlling an electronic device having a touch-screen for receiving inputs thereto, comprising identifying a touch comprising a first phase in which a moving touch is identified as being in a particular direction by applying a directional criterion; and a second phase in which no directional criterion or a more relaxed directional criterion is applied, wherein said first phase lasts for a predetermined time, or distance, of touch.

It should be appreciated that the embodiments described above are simply specific examples of the application of various features of the aspects of the invention and that there are many possible variations within the scope of the inventions. In particular any two or more features disclosed in different embodiments may be provided together in a single application or device and conversely any feature disclosed only in combination with other features could equally well be employed without those features in other embodiments.

## Claims

1. A user interface system for controlling an electronic device (2) having a touch-screen (4), the system being configured:
- to detect and identify a static touch on the touch-screen (4) at a fixed contact point;
- in response to detecting the static touch, to display a graphical object (10a) containing or surrounding the contact point; and
- to change a visual attribute of the displayed graphical object (10a) progressively over time while the static touch continues.

2. A user interface system as claimed in claim 1 wherein the visual attribute is the size of the displayed graphical object (10a).

3. A user interface system as claimed in claim 1 or 2 further configured such that, once a predetermined duration of contact has been reached, the change stops and a function of the device (2) is invoked.

4. A user interface system as claimed in any of claims 1 to 3 wherein the graphical object (10a) comprises a menu.

5. A user interface system as claimed in any preceding claim, the system being further configured:
- to display a representation of geographic features on the touch-screen (4);
- to determine a geographic location corresponding to the contact point on the touch-screen (4); and
- if the static touch satisfies a predetermined minimum duration, to cause a change in the display so as to display information relating to the geographic location.

6. A method of controlling an electronic device (2) having a touch-screen (4), comprising:
- detecting and identifying a static touch on the touch-screen (4) at a fixed contact point;
- in response to detecting the static touch, displaying a graphical object (10a) containing or surrounding the contact point; and
- changing a visual attribute of the displayed graphical object (10a) progressively over time while the static touch continues.

7. A method as claimed in claim 6 wherein the visual attribute is the size of the displayed graphical object (10a).

8. A method as claimed in claim 6 or 7 further comprising, once a predetermined duration of contact has been reached, stopping the change and invoking a function of the device (2).

9. A method as claimed in any of claims 6 to 8 wherein the graphical object (10a) comprises a menu.

10. A method as claimed in any of claims 6 to 9, further comprising:
- displaying a representation of geographic features on the touch-screen (4);
- determining a geographic location corresponding to the contact point on the touch-screen (4); and
- if the static touch satisfies a predetermined minimum duration, causing a change in the display so as to display information relating to the geographic location.

11. Computer software which, when executed on an electronic device (2) having a touch-screen (4), causes the device (2):
- to detect and identify a static touch on the touch-screen (4) at a fixed contact point;
- in response to detecting the static touch, to display a graphical object (10a) containing or surrounding the contact point; and
- to change a visual attribute of the displayed graphical object (10a) progressively over time while the static touch continues.

12. Computer software as claimed in claim 11 wherein the visual attribute is the size of the displayed graphical object (10a).

13. Computer software as claimed in claim 11 or 12 wherein the computer software causes the device (2), once a predetermined duration of contact has been reached, to stop the change and invoke a function of the device (2).

14. Computer software as claimed in any of claims 11 to 13 wherein the graphical object (10a) comprises a menu.

15. Computer software as claimed in any of claims 11 to 14 wherein the computer software causes the device to:
- display a representation of geographic features on the touch-screen (4);
- determine a geographic location corresponding to the contact point on the touch-screen (4); and
- if the static touch satisfies a predetermined minimum duration, cause a change in the display so as to display information relating to the geographic location.
